# EUROPEAN PATENT SPECIFICATION

(11) **EP 3 280 018 B1**
(45) Date of publication and mention of the grant of the patent: **06.05.2020**
(21) Application number: 16182901.5
(22) Date of filing: 05.08.2016
(51) Int. Cl.: H02G 3/04, H02G 3/08

(54) **ELECTRICAL INSTALLATION BOX WITH INSERT OF FIRE RETARDANT MATERIAL**
ELEKTRO-INSTALLATIONSDOSE MIT EINSATZ EINES FEUERHEMMENDEN MATERIALS
BOÎTE D'INSTALLATION ÉLECTRIQUE AVEC INSERT DE MATÉRIAU IGNIFUGE

(43) Date of publication of application: 07.02.2018
(73) Proprietor: ABB Schweiz AG, 5400 Baden (CH)
(72) Inventor: Koppenol, Arnoldus, 6713 KB Ede (NL); Van Bezu, Denis, 6716 AA Ede (NL); De-Jong, Harold, 3523 AL Utrecht (NL)
(74) Representative: Marks, Frank

(56) References cited:
- EP-A1- 2 472 685
- GB-A- 2 277 871
- GB-A- 2 325 728
- US-B1- 6 252 167

## Description

The invention is about an electrical installation box to be applied in an aperture of a wall previously provided in one side of the wall, the installation box comprising a prefabricated shell having a body of an open container shape, with side walls and a rear wall and opening forwardly at the top side, opposite the rear wall, the side walls and rear wall forming a chamber opening outwards the wall for receiving electrical components, the body presenting cable passage apertures, and a fire retardant intumescent material.

The invention is also about a system comprising an electrical installation box and a plasterboard wall with a metal based load bearing internal structure, the installation box being applied in a plaster-based board forming one side of the plasterboard wall.

The present invention relates to electrical installation boxes, such as component boxes and junction boxes, for application to walls, and more particularly to plaster-board walls with a metal based load bearing internal structure, and even more particularly to a plaster-based board forming one side of the plasterboard wall, and even more particularly to aspects of fire resistance of plasterboard walls.

As is known, plasterboard walls used for internal partitions of buildings consist of a load bearing structure, made of wood or metal studs, in particular galvanized steel, faced on both sides with one or more plaster-based boards. The boards on the respective sides of the wall bound an interspace into which the service installations, in particular the electrical installations, or insulating material, such as mineral wool, stone wool, glass wool, or other fibrous material can be inserted. Plaster-based boards are categorized according to the properties of the plaster-board material. For example, so-called Type A plasterboards according to European standard EN 520 have a density of ca. 700 kg/m³, and so-called Type DF plasterboards according to European standard EN 520 have a density of ca. > 880 kg/m³. Type DF plasterboards are more expensive than Type A boards. On the other hand, Type DF boards have a higher fire resistance than Type A boards.

In compliance with common fire protection rules and technical standards for fire protection, all walls including plasterboard walls are required to present a certain defined fire resistance. For example, German standard DIN 4102-2 and European standard EN 13501 define fire resistance ratings for walls. A wall with a fire resistance rating F60 (DIN) or REI60 (EN) has to withstand a fire for 60 minutes, meaning it has to reach a 60 minute protection against flame and heat radiation throughput through the wall.

A plasterboard wall made of Type A material can achieve a required 60 minute fire resistance if the wall has no openings or throughputs. In case the plasterboard wall has apertures for receiving electrical installation boxes, and has such installation boxes installed, these apertures and installed installation boxes represent weak points in regards of fire resistance. Special fire retardant solutions for the electrical installation boxes are thus required.

Known fire retardant solutions for installation boxes apply a slice of intumescent material which is glued to the bottom of the installation box. An example is shown in EP 1 221 749 B1. In case of a fire, the intumescent material is meant to expand in volume and to fill up the cavity of the installation box, and by doing so should plug the hole in the wail resulting from inserting the installation box. A drawback of this solution, however, is that the intumescent material when expanding expands from the bottom of the installation box in the space between the two plaster-based boards. Once the plastic material of the installation box has melted by the heat of the fire, most of the expanded intumescent material falls down in the space between the boards, and only a small amount, or in some cases none at all, of the intumescent material remains there to fill the hole. So in order to achieve the fire resistance requirements, even with this solution for the installation box, still a higher quality and more expensive type of plasterboard wall material is required, for example the above mentioned Type DF or other.

EP 2 472 685 A1 shows a hollow-wall box for arranging electric installations in a hollow wall, comprising a housing provided with a first bottom wall and a first circumferential wall upright from the first bottom wall, where a fire resistant insert piece is provided with a second bottom wall and a second circumferential wall upright from the second bottom wall.

US 6252167B1 shows an electrical box defining an opening for access therein and a support sized to cover a majority of said opening, where an intumescent material is applied to said support and said support is mounted adjacent to said opening so that the intumescent material covers at least a majority of said opening.

GB 2277871A shows a container which comprises a casing and a door, both formed of a non-flammable material and latch means for securing the door in a closed position, wherein both casing and door are lined with layers of an intumescent adhesive, a heat resistant thermal insulant material and an intumescent strip.

GB 2325728A shows a fire resistant cover for a ceiling mounted electrical light fitting, which comprises a metallic and/or ceramic hood having one or more upstanding sides and a top, wherein the hood is coated of lined or partially coated or lined on one or more of its internal surfaces with a liquid based or solid intumescent material and the dimensions of the hood are such that the hood can be positioned over and around a light fitting with the light spaced from the internal walls.

So it is the objective of this invention to provide an electrical installation box with an insert of fire retardant material which will in case of fire reliably fill the hole in the wall and thus allows for using a plasterboard wall made of lower quality and thus cheaper material.

It is a further objective of the invention to create an improved system comprising an electrical installation box and a plasterboard wall with a metal based load bearing internal structure, the installation box being applied in a plaster-based board forming one side of the plasterboard wall.

The objective in respect of the electrical installation box is achieved by an electrical installation box according to claim 1.

The objective in respect of the system is achieved by a system according to claim 7.

So according to the invention, a strip of fire retardant intumescent material is located at the inner surface of the side walls next to the top side, so that in case of fire, the strip considerably increases its volume and fills up the opening at the top side and plugs the aperture in the wall.

By applying the fire retardant intumescent material in the form of a strip, like a collar, at the top of the installation box, the intumescent material, when expanding, will no longer be possible to fall down in the space between the plaster-based boards, but will expand in the right direction towards the center of the outward facing opening of the chamber of the installation box. It will expand exactly where the hole is, resulting in a reliable plugging of the hole in the wall remaining in place the integrity of the complete wall during a fire for a significantly longer period. The installation box according to the invention thus creates the opportunity to use less expensive building material for the plasterboards, such as the above mentioned Type A material instead of the more expensive Type DF material, and still meet the fire resistance requirements.

According to a preferred embodiment of the invention, the shell of the installation box is a molded plastic part.

According to a preferred embodiment of the invention, the strip of fire retardant intumescent material is fixed to the side walls by a self-adhesive band.

According to a preferred embodiment of the invention, the shell is provided with an edge flange along the chamber opening, the flange forming one piece with the body. The flange is used for fixing the installation box in the wall. It defines a surface which is positioned coplanar with the relative side of the plasterboard wall when the installation box is mounted in the respective aperture in the wall.

The invention will be more easily understood from the ensuing description of one embodiment thereof, given by way of example. For this description, reference is made to the accompanying drawings, in which:

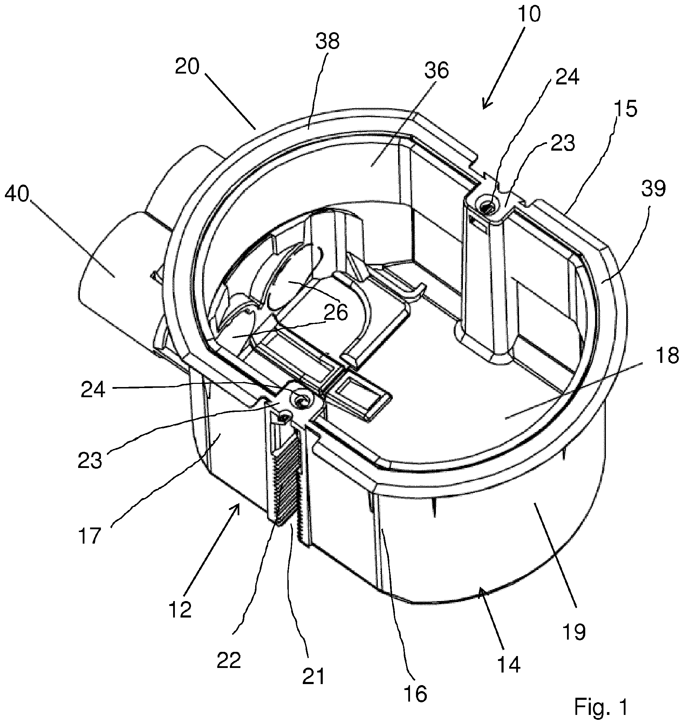

Figure 1 shows a perspective view onto an electrical installation box according to the invention,

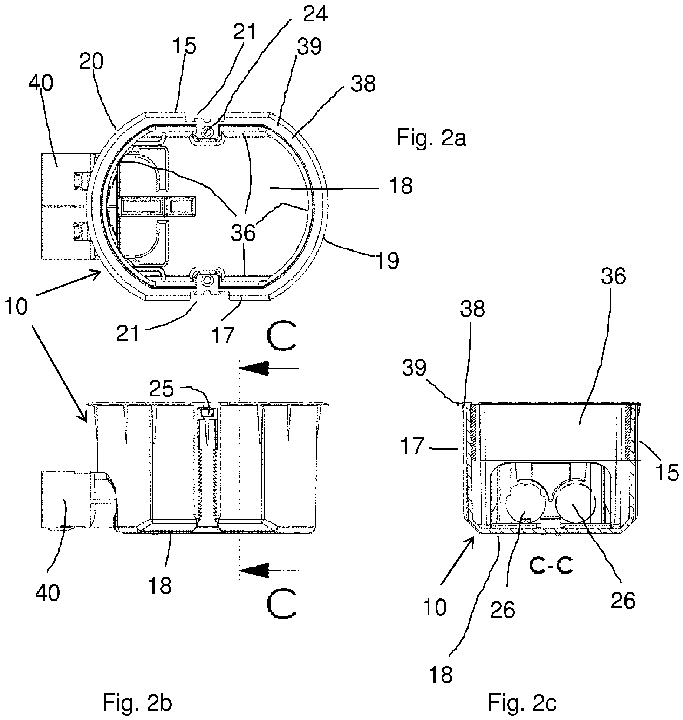

Figure 2a shows a front elevation of the installation box as shown in figure 1,
Figure 2b shows a side elevation of the installation box as shown in figure 1,
Figure 2c shows a cross-sectional view through the installation box as shown in figure 1, along the sectional plane CC as indicated in figure 2b.

As can be seen from the figures, the electrical installation box 10 comprises a shell 12, the body 14 of which is formed as a kind of container. The container has is in this exemplary case of overall oval shape. It has a side wall 16 on overall oval shape. The side wall 16 has two straight wall sections 15, 17, located vis-à-vis each other, and two end-sections 19, 20, having overall semi-circular shape and connecting the two straight sections 15, 17 to form a closed oval contour of the wall 16.

The container has a rear wall 18, and presents an opening forwardly at the top side, opposite the rear wall 18. When the electrical installation box 10 is installed in an aperture in a wall, for example a plaster-based board forming one side of the plaster-board wall, the side wall 16 and rear wall 18 form a chamber or container opening outwards the wall for receiving electrical components, such as for example only a socket or a plug or a switch etc.

The shell 12 also presents an edge flange 38, forming one piece with the body 14. When the installation box 10 is installed in a wall, the flat outer surface 39 of the flange 38 will be coplanar with the outer surface of the board forming the respective outer surface of that wall.

The electrical installation box 10 is made of a plastic material, for example by injection molding.

In the lateral side wall 16 of the container-shaped bogy 14 of the shell 12 there are provided two through apertures 26, forming so-called cable passages, through which apertures 26 there can be passed the electric cables (not shown) to be connected, for example, to the components contained in the open cavity of the electrical installation box 10. The cable passage apertures 26 in the exemplary embodiment shown here are located in one of the circular-shaped end-sections of the side wall 16.

As can be seen in the figures, a tubular part 40 is detachably fixed to the side wall 16 at the cable passage apertures 26. The tubular part 40 is used as a sort of pipe fitting or connection joint for connecting to installation tubes or ductwork for cables in the wall.

Near the center of each of the straight sections 15, 17 there is a slot 21 in the wall, having rippled inner surfaces 22 and a cover piece 23 which is coplanar with the flange 38. The cover piece 23 bears an opening 24 for receiving a screw 25. The slot 21 is used for receiving fixing means (not shown) to fix the electrical installation box 10 to the wall, into the aperture of the wall. Such fixing means in principle are known, they can for example only be realized in the form of conventional toggle bolts or the like.

As can be seen in the figures, at the inner surface of the side wall 16, next to the top side, a strip, can also be described as a band, of fire retardant intumescent material 36 is located. The strip, or band, of intumescent material forms a kind of collar at the interior surface of the wall 16. It ranges from the top side, close to the flange 38 down towards the interior of the container opening of the electrical installation box 10.

The width of the strip or band of intumescent material is chosen in a way that it does not cover the cable passage apertures 26.

The strip or band of intumescent material goes all around the inner side of the wall 26, interrupted only by the slots 22. In a further embodiment, however, the strip or band of intumescent material could also cover the slot area.

The strip or band of fire retardant intumescent material 36 is fixed to the side wall 16 by a self-adhesive band. It can, of course, as well be fixed by other suitable means known to the person skilled in the art.

In case of fire, the intumescent material 36 of the strip or collar considerably increases its volume. When expanding, it will expand in the right direction towards the center of the outward facing opening of the chamber of the installation box 10 and it will fill up the opening at the top side and will plug the aperture in the wall. It will expand exactly where the hole is, resulting in a reliable plugging of the hole in the wall remaining in place the integrity of the complete wall during a fire for a significantly longer period. The installation box according to the invention thus creates the opportunity to use less expensive building material for the plasterboards, such as the above mentioned Type A material instead of the more expensive Type DF material, and still meet the fire resistance requirements.

### List of reference numerals

- 10: electrical installation box
- 12: prefabricated shell
- 14: body
- 15: first straight wall section
- 16: side wall
- 17: second straight wall section
- 18: rear wall
- 19: first end section
- 20: second end section
- 21: slot
- 22: rippled inner surface
- 23: cover piece
- 24: opening
- 25: screw
- 26: cable passage aperture
- 36: fire retardant intumescent material
- 38: flange
- 39: flat outer surface of the flange
- 40: tubular part

## Claims

1. An electrical installation box (10) to be applied in an aperture of a wall previously provided in one side of the wall, the installation box (10) comprising a prefabricated shell (12) having a body (14) of an open container shape, with side walls (16) and a rear wall (18) and opening forwardly at the top side, opposite the rear wall (18), the side walls (16) and rear wall (18) forming a chamber opening outwards the wall for receiving electrical components, the body (14) presenting cable passage apertures (26), and a fire retardant intumescent material (36)
**characterized in that** the fire retardant intumescent material is applied in the form of a collar-like strip at the inner surface of the side walls (16) next to the top side, so that in case of fire, the strip considerably increases its volume and fills up the opening at the top side and plugs the aperture in the wall.

2. An electrical installation box (10) according to claim 1, **characterized in that** the shell (12) is a molded plastic part.

3. An electrical installation box (10) according to claim 1, **characterized in that** the strip of fire retardant intumescent material (36) is fixed to the side walls (16) by a self-adhesive band.

4. An electrical installation box (10) according to claim 1, **characterized in that** the shell (12) is provided with an edge flange (38) along the chamber opening, the flange (38) forming one piece with the body (14).

5. An electrical installation box (10) according to any of the preceding claims, **characterized in that** in the I side wall (16) there is provided at least one through apertures (26), forming a cable passage for passing electric cables to be connected.

6. An electrical installation box according to claim 5, **characterized in that** a tubular part (40) is detachably fixed to the side wall (16) at the cable passage aperture (26), which can be used as pipe fitting or for connecting to ductwork for cables in the wall.

7. A system comprising an electrical installation box (10) according to any of the preceding claims, and a plasterboard wall with a metal based load bearing internal structure, the installation box (10) being applied in a plaster-based board forming one side of the plasterboard wall.

## Patentansprüche

1. Elektroinstallationskasten (10), der in einer Öffnung einer Wand anzubringen ist, die vorab in einer Seite der Wand bereitgestellt worden ist, wobei der Installationskasten (10) eine vorgefertigte Hülle (12) umfasst, die einen Körper (14) in der Form eines offenen Behälters mit Seitenwänden (16) und einer Rückwand (18) aufweist und sich auf der Oberseite gegenüber der Rückwand (18) nach vorne öffnet, wobei die Seitenwände (16) und die Rückwand (18) eine Kammer bilden, die sich zum Aufnehmen elektrischer Komponenten nach außerhalb der Wand öffnet, wobei der Körper (14) Kabelkanalöffnungen (26) und ein feuerhemmendes, schaumschichtbildendes Material (36) aufweist,
**dadurch gekennzeichnet, dass** das feuerhemmende, schaumschichtbildende Material in der Form eines kragenartigen Streifens an der Innenfläche der Seitenwände (16) angrenzend an die Oberseite aufgebracht ist, derart, dass der Streifen im Fall eines Feuers sein Volumen erheblich erhöht und die Öffnung an der Oberseite ausfüllt und die Öffnung in der Wand verstopft.

2. Elektroinstallationskasten (10) nach Anspruch 1, **dadurch gekennzeichnet, dass** die Hülle (12) eine geformte Kunststoffkomponente ist.

3. Elektroinstallationskasten (10) nach Anspruch 1, **dadurch gekennzeichnet, dass** der Streifen des feuerhemmenden, schaumschichtbildenden Materials (36) durch ein selbstklebendes Band an den Seitenwänden (16) befestigt ist.

4. Elektroinstallationskasten (10) nach Anspruch 1, **dadurch gekennzeichnet, dass** die Hülle (12) mit einem Kantenflansch (38) entlang der Kammeröffnung versehen ist, wobei der Flansch (38) mit dem Körper (14) ein Stück bildet.

5. Elektroinstallationskasten (10) nach einem der vorhergehenden Ansprüche, **dadurch gekennzeichnet, dass** in der Seitenwand (16) mindestens eine Durchgangsöffnung vorgesehen ist, die einen Kabelkanal zum Durchführen von anzuschließenden elektrischen Kabeln bildet.

6. Elektroinstallationskasten nach Anspruch 5, **dadurch gekennzeichnet, dass** eine röhrenförmige Komponente (40) auf abnehmbare Weise an der Kabelkanalöffnung (26) an der Seitenwand (16) befestigt ist, die als Rohrleitungsanschlussstück oder zum Verbinden mit einem Kanal für Kabel in der Wand verwendet werden kann.

7. System, das einen Elektroinstallationskasten (10) nach einem der vorhergehenden Ansprüche und eine Gipskartonplattenwand mit einer metallbasierten, internen Lastträgerstruktur umfasst, wobei der Installationskasten (10) in einer gipsbasierten Platte, die eine Seite der Gipskartonwand bildet, angebracht ist.

## Revendications

1. Boîtier d'installation électrique (10) destiné à être appliqué dans un trou d'un mur précédemment ménagé dans un côté du mur, le boîtier d'installation (10) comprenant une coque préfabriquée (12) ayant un corps (14) en forme de contenant ouvert, avec des parois latérales (16) et une paroi arrière (18) ainsi qu'une ouverture vers l'avant au niveau du côté de dessus, à l'opposé de la paroi arrière (18), les parois latérales (16) et la paroi arrière (18) formant une ouverture de chambre vers l'extérieur du mur pour recevoir des composants électriques, le corps (14) présentant des trous (26) de passage pour câbles et un matériau intumescent ignifuge (36),
**caractérisé en ce que** le matériau intumescent ignifuge est appliqué sous la forme d'une bande de type collier au niveau de la surface intérieure des parois latérales (16) à proximité du côté de dessus de sorte qu'en cas d'incendie, la bande augmente considérablement de volume et remplisse l'ouverture au niveau du côté de dessus et bouche le trou dans le mur.

2. Boîtier d'installation électrique (10) selon la revendication 1, **caractérisé en ce que** la coque (12) est une pièce plastique moulée.

3. Boîtier d'installation électrique (10) selon la revendication 1, **caractérisé en ce que** la bande de matériau intumescent ignifuge (36) est fixée aux parois latérales (16) par un ruban autoadhésif.

4. Boîtier d'installation électrique (10) selon la revendication 1, **caractérisé en ce que** la coque (12) est pourvue d'une collerette de bord (38) le long de l'ouverture de chambre, la collerette (38) étant formée d'un seul tenant avec le corps (14).

5. Boîtier d'installation électrique (10) selon l'une quelconque des revendications précédentes, **caractérisé en ce qu'**au moins un trou traversant (26), formant un passage pour câbles pour faire passer des câbles électriques à raccorder, est ménagé dans la paroi latérale (16).

6. Boîtier d'installation électrique (10) selon la revendication 5, **caractérisé en ce qu'**une pièce tubulaire (40) est fixée de façon amovible à la paroi latérale (16) au niveau du trou (26) de passage pour câbles, laquelle est susceptible d'être utilisée comme raccord de conduit ou pour être raccordée à un réseau de gaines pour câbles dans le mur.

7. Système comprenant un boîtier d'installation électrique (10) selon l'une quelconque des revendications précédentes et un mur à plaque de plâtre doté d'une structure interne porteuse à base de métal, le boîtier d'installation (10) étant appliqué dans une plaque à base de plâtre formant un côté du mur à plaque de plâtre.
